# EUROPEAN PATENT APPLICATION

(11) **EP 1 589 245 A2**
(43) Date of publication of application: **26.10.2005**
(21) Application number: 05252467.5
(22) Date of filing: 20.04.2005
(51) Int. Cl.: F16D 13/72

(54) **Cooling structure for clutch**

(30) Priority: 22.04.2004 JP 2004127123
(71) Applicant: HONDA MOTOR CO., Ltd., Tokyo 107-8556 (JP)
(72) Inventor: Kitajima, Kiyouji, Wako-shi Saitama-ken 351-0193 (JP); Konishi, Koichi, Wako-shi Saitama-ken 351-0193 (JP); Fujimoto, Shinji, Wako-shi Saitama-ken 351-0193 (JP)
(74) Representative: Piésold, Alexander James

(57) **Abstract**

In a manual transmission having a configuration in which an input shaft 8 and a counter shaft 10 extend in parallel relationship with each other in a clutch housing 4 and a transmission case 6 and in which torque of the counter shaft 10 is transmitted through orthogonal gears and a differential device 76 to an axle 84, 86 extending in orthogonal relationship with the input shaft 8, an air introduction passage 88 for introducing outside air into the clutch housing 4 is formed at a portion of the clutch housing 4 just under the axle 84, 86. With this structure, the outside air is introduced through the air introduction passage 88 and a spacing between the input shaft 8 and the clutch housing 4 into a clutch chamber 36.

## Description

The present invention relates to a cooling structure for a clutch in a manual transmission.

In a vehicle having a manual transmission, a dry friction clutch is generally provided between an engine and the manual transmission. The dry friction clutch is generally constituted of a clutch cover and a clutch disc. The clutch cover includes a pressure plate movable in an axial direction of an input shaft and a diaphragm spring for applying a load on the pressure plate in the axial direction. The clutch cover is fixed to a flywheel.

On the other hand, the clutch disc is disposed between the flywheel and the pressure plate. The clutch disc is engaged with a spline formed on the outer circumference of the input shaft connected to the transmission, so that the clutch disc is movable in the axial direction of the input shaft. The pressure plate is normally biased by the diaphragm spring to press the clutch disc on the flywheel. Accordingly, a drive force generated from the engine is transmitted through the flywheel and the clutch disc to the transmission by a frictional force between the clutch disc and the flywheel and a frictional force between the clutch disc and the pressure plate. When a clutch pedal is depressed, the biasing force of the diaphragm spring applied to the pressure plate is removed and the pressure plate is axially moved away from the clutch disc, so that the transmission of the drive force from the engine is cut off.

In such operational circumstances that the start and stop of a vehicle having a manual transmission is complicatedly repeated or in such a vehicle that the frequency of operations of a clutch is high, e.g., in a commercial vehicle such as a taxi, a friction surface between the pressure plate and the clutch disc and a friction surface between the clutch disc and the flywheel rise in temperature because of the friction between the clutch disc and the pressure plate. As a result, there arises a problem such that the frictional characteristics of a friction material attached to the clutch disc are degraded or the durability of the friction material is reduced. In particular, the frictional characteristics of the friction material is rapidly degraded at a temperature higher than about 250°C.

To solve this problem, there have been proposed various structures for cooling the friction surface between the clutch disc and the pressure plate and the friction surface between the clutch disc and the flywheel by forming an outside air introducing opening in a clutch housing to introduce an outside air into a clutch chamber.

In a conventional clutch cooling structure a hole is formed in a release guide to introduce outside air through a spacing between the input shaft and the release guide into the clutch chamber, such that the outside air to be introduced rises in temperature because of heat from the clutch before it reaches the friction surfaces. Accordingly, the friction surface between the clutch disc and the pressure plate and the friction surface between the clutch disc and the flywheel cannot be efficiently cooled by the outside air introduced, causing a rise in temperature of the friction surfaces. As a result, the coefficient of friction of the clutch is reduced to cause a degradation in frictional characteristics.

It is therefore an object of the present invention to provide a cooling structure for a clutch in a manual transmission which can introduce cool outside air into a clutch chamber.

In accordance with the present invention, there is provided a cooling structure for a clutch of a manual transmission having a configuration in which an input shaft and a counter shaft extend in parallel relationship with each other in a clutch housing and a transmission case and in which torque from said counter shaft is transmitted through orthogonal gears and a differential device to an axle extending in orthogonal relationship with said input shaft, characterized in that an air introduction passage for introducing outside air into said clutch housing is formed at a portion of said clutch housing just under said axle, whereby the outside air is introduced through said air introduction passage and a spacing between said input shaft and said clutch housing into a clutch chamber.

According to the present invention, the inside of the clutch chamber can be efficiently cooled by the cool outside air introduced, so that a reduction in coefficient of friction can be suppressed. Accordingly, when starting a vehicle on an up-slope or the like where the amount of energy absorbed by the clutch is large, the resistance against clutch slipping due to a reduction in coefficient of friction can be improved.

The above and other objects, features and advantages of the present invention and the manner of realizing them will become more apparent, and the invention itself will best be understood from a study of the following description and appended claims.

Preferred embodiments of the present invention will now be described by way of example only and with reference to the accompanying drawings in which:
FIG. 1 is a sectional view of a manual transmission at a position where a differential device is provided according to a preferred embodiment of the present invention;
FIG. 2 is a cross section taken along the line II-II in FIG. 1; and
FIG. 3 is a graph showing the relation between a temperature in a clutch chamber and a coefficient of friction *µ* of a clutch.

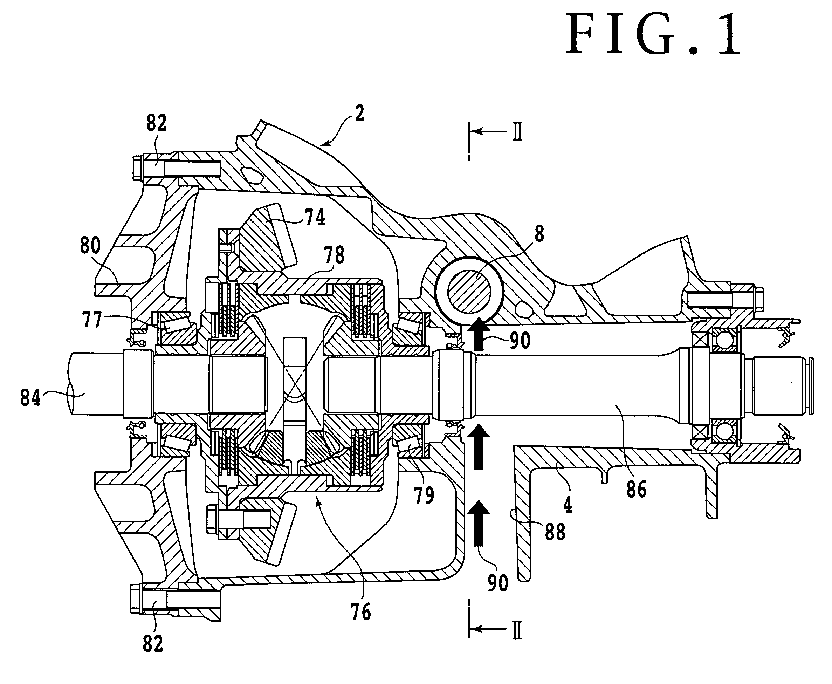

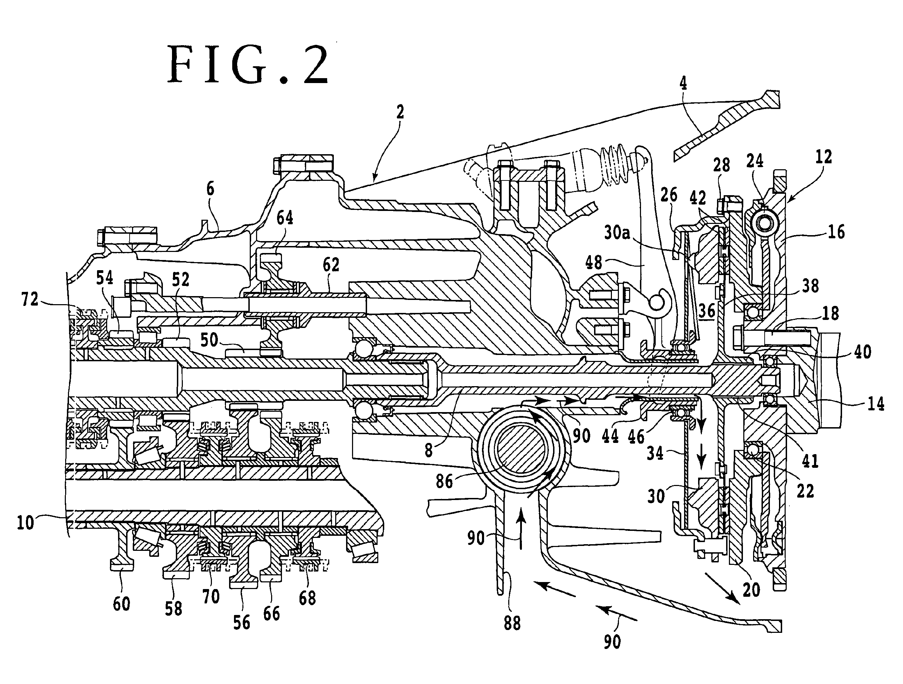

FIG. 1 is a sectional view of a manual transmission 2 at a position where a differential device 76 is provided, and FIG. 2 is a cross section taken along the line II-II in FIG. 1. As shown in FIG. 2, the manual transmission 2 has a clutch housing 4 and a transmission case 6 connected together. An input shaft (main shaft) 8 and an output shaft (counter shaft) 10 are arranged in parallel to each other and rotatably mounted in the clutch housing 4 and the transmission case 6. A dry friction clutch 12 is interposed between the input shaft 8 and a crankshaft 14 of an engine. The clutch 12 has a first flywheel 16 fixed to the crankshaft 14 by a bolt 18.

The clutch 12 further has a second flywheel 20 rotatably mounted at its inner circumference through bearings 22 to the flywheel 16. A torsion spring 24 is provided between the first flywheel 16 and the second flywheel 20 at their outer circumferential portions to connect these flywheels 16 and 20. Thus, the first flywheel 16 and the second flywheel 20 are connected at their outer circumferential portions by the torsion spring 24, so that the second flywheel 20 is rotated with the crankshaft 14 as absorbing fluctuations in rotational speed. A clutch cover 26 is fixed to the second flywheel 20 by a bolt 28. A pressure plate 30 is axially movably mounted to the clutch cover 26 by a strap (not shown).

The pressure plate 30 has an annular projection 30a, and a diaphragm spring 34 is mounted to the clutch cover 26 so as to abut against the annular projection 30a. In other words, the diaphragm spring 34 is normally biased so that an outer circumferential portion of the diaphragm spring 34 abuts against the annular projection 30a of the pressure plate 30. A clutch chamber 36 is defined by the second flywheel 20 and the diaphragm spring 34. A clutch disc 38 is fixed to a hub 40. The hub 40 is mounted on the transmission input shaft 8 near its front end through a spline 41 axially slidably and relatively nonrotatably.

Facings (friction materials) 42 are fixed to the front and rear opposite surfaces of the clutch disc 38. In a clutch-on condition where the clutch 12 is engaged as shown in FIG. 2, the pressure plate 30 is firmly pressed on the facings 42 of the clutch disc 38 by a biasing force of the diaphragm spring 34, so that the rotation of the flywheels 16 and 20 is directly transmitted through the clutch disc 38 to the input shaft 8.

The clutch housing 4 is integrally formed with a release guide 44, and a release bearing 46 is slidably mounted on the release guide 44. When the release bearing 46 is slid leftward as viewed in FIG. 2 by the operation of a release fork 48, the inner circumference of the diaphragm spring 34 is moved leftward. Accordingly, the biasing force of the diaphragm spring 34 acting on the pressure plate 30 is removed. As a result, the depression force of the pressure plate 30 acting on the facings 42 of the clutch disc 38 is removed to provide a clutch-off condition where the clutch 12 is disengaged. That is, the transmission of torque from the crankshaft 14 through the clutch 12 to the transmission input shaft 8 is cut off.

A first-speed drive gear 50 and a second-speed drive gear 52 are fixedly mounted on the input shaft 8, and a third-speed drive gear 54 is rotatably mounted on the input shaft 8. On the other hand, a first-speed driven gear 56 and a second-speed driven gear 58 are rotatably mounted on the counter shaft 10, and a third-speed driven gear 60 is fixedly mounted on the counter shaft 10. The first-speed driven gear 56 is always in mesh with the first-speed drive gear 50. The second-speed driven gear 58 is always in mesh with the second-speed drive gear 52. The third-speed driven gear 60 is always in mesh with the third-speed drive gear 54.

A reverse shaft 62 is fixed to the clutch housing 4. A reverse idle gear 64 always meshing with the first-speed drive gear 50 is rotatably mounted on the reverse shaft 62. The reverse idle gear 64 is always in mesh with a reverse driven gear 66 rotatably mounted on the counter shaft 10. A reverse synchromesh 68 and a first/second speed synchromesh 70 are mounted on the counter shaft 10. A third/fourth speed synchromesh 72 is mounted on the input shaft 8. When the first/second speed synchromesh 70 is operated, either the first-speed driven gear 56 or the second-speed driven gear 58 is fixed to the counter shaft 10. When the third/fourth speed synchromesh 72 is operated, either the third-speed drive gear 54 or a fourth-speed drive gear (not shown) is fixed to the input shaft 8. When the reverse synchromesh 68 is operated, the reverse driven gear 66 is fixed to the counter shaft 10.

The counter shaft 10 is integrally formed at its front end with a hypoid pinion gear (not shown). This hypoid pinion gear is in mesh with a hypoid ring gear 74 shown in FIG. 1. The hypoid pinion gear and the hypoid ring gear 74 are disposed as orthogonal gears whose axes of rotation are orthogonal to each other. The hypoid ring gear 74 is fixed to a differential case 78 of the differential device 76. The differential case 78 is rotatably supported through a pair of bearings 77 and 79 to the clutch housing 4. The torque of the counter shaft 10 is transmitted through the hypoid pinion gear and the hypoid ring gear 74 to the differential device 76, and is then distributed to left and right axles 84 and 86 by the differential device 76. Reference numeral 80 denotes a differential cover, which is fixed to the clutch housing 4 by a plurality of bolts 82.

An air introduction passage 88 for introducing an outside air into the clutch housing 4 is formed at a portion of the clutch housing 4 just under the axle 86. As shown by arrows 90, a relatively cool outside air is introduced from the air introduction passage 88 through a spacing between the axle 86 and the clutch housing 4, a spacing between the input shaft 8 and the clutch housing 4, and a spacing between the input shaft 8 and the release guide 44 into the clutch chamber 36. The friction surfaces of the clutch disc 38, the second flywheel 20, and the pressure plate 30 are cooled by the outside air introduced in the above manner. Since the air introduction passage 88 is spaced apart from the clutch 12, a relatively cool outside air can be introduced into the clutch chamber 36.

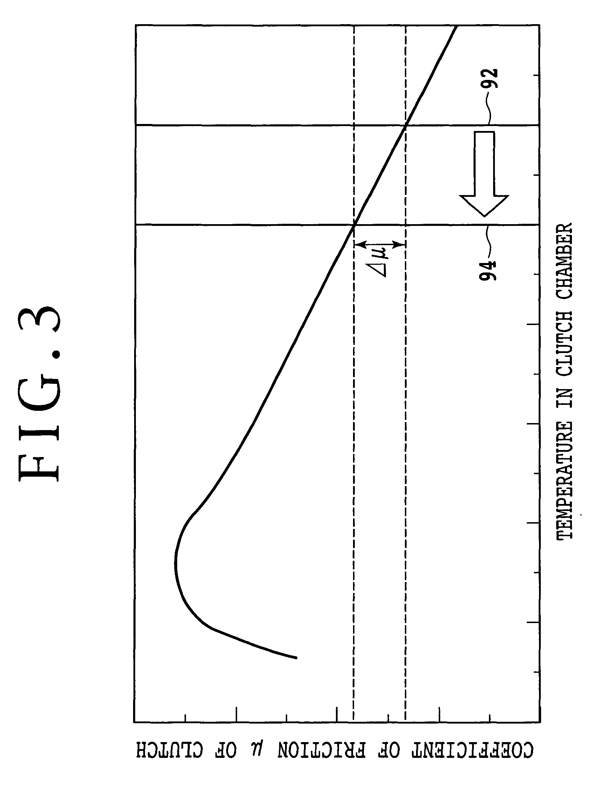

Accordingly, if the friction surfaces in the clutch chamber 36 can be naturally cooled from a line 92 to a line 94 shown in FIG. 3, the coefficient of friction *µ* of the clutch 12 can be increased by Δ *µ*. In this manner, the inside of the clutch chamber 36 can be efficiently cooled to thereby suppress a reduction in coefficient of friction of the clutch 12. Accordingly, when starting a vehicle on an up-slope or the like where the amount of energy absorbed by the clutch 12 is large, the resistance against clutch slipping due to a reduction in coefficient of friction can be improved.

## Claims

1. A cooling structure for a clutch of a manual transmission having a configuration in which an input shaft (8) and a counter shaft (10) extend in parallel relationship with each other in a clutch housing (4) and a transmission case (6) and in which torque from said counter shaft is transmitted through orthogonal gears and a differential device (76) to an axle (84,86) extending in orthogonal relationship with said input shaft,
**Characterized in that** an air introduction passage (88) for introducing outside air into said clutch housing is formed at a portion of said clutch housing just under said axle, whereby the outside air is introduced through said air introduction passage and a spacing between said input shaft and said clutch housing into a clutch chamber.
